# EUROPEAN PATENT APPLICATION

(11) **EP 4 759 134 A1**
(43) Date of publication of application: **17.06.2026**
(21) Application number: 25223089.1
(22) Date of filing: 12.12.2025
(51) Int. Cl.: A01K 5/00, A01K 5/01

(54) **HAY NET FILLING STAND AND HAY BAG FILLING SET FOR HORSES**

(30) Priority: 12.12.2024 PL 45055124
(71) Applicant: Hirsch - Pol Spolka Z Ograniczona Odpowiedzialnoscia, 86-031 Osielsko (PL)
(72) Inventor: HIRSZ, Maciej, 86-031 Osielsko (PL)
(74) Representative: Witek, Rafal

(57) **Abstract**

The subject of the invention is a stand for filling hay nets comprising a frame to which a hoop for securing a hay bag is mounted, characterized in that the stand frame consists of a stand base (7) from which at least one stand leg extends, the leg comprising a lower part (6) and an upper part (5), the lower part (6) and the upper part (5) being detachably connected to adjust the height of the stand leg, the lower (6) and upper (5) parts having first ends and second ends, and to at least one stand leg a stand hoop (2) with hooks (1) for securing the hay bag is mounted, the hooks (1) being oriented with their hooking portions toward the inside of the stand hoop (2), and the hooks (1) extending from the stand hoop (2) toward the stand base (7). The invention also includes a set comprising the stand for filling hay nets and a hay net adapted to cooperate with the stand.

## Description

The subject of the invention is a stand for filling hay bags for horses and a set for filling hay bags for horses.

From the prior art, devices for filling hay nets are known, comprising a vertical frame to which a circular frame with means for attaching the net is mounted. For example, in commercially available solutions, upward-facing pins extending from the circular frame are used as the means for attaching the net. German utility model description DE202017000469U1 discloses a device for filling hay nets, characterized in that it is formed from a material of a certain stiffness as a flexible strip which is connected and closed in a ring shape by a closing element, thereby defining an opening for filling the hay net. In another German utility model application DE202012006649U1, a closable stand for feeding animals with a hay net is disclosed as a corner structure mounted to a wall, consisting of a foldable metal frame with an integrated hay net. In yet another utility model description DE102008011918A1, a device for filling hay nets is disclosed, having a circular frame with circumferentially arranged and upward-facing extensions for attaching hay nets on the upper side during the filling process, wherein the frame is horizontal in the state of use and defines the filling opening. Support elements are detachably mounted to the frame and extend downward, the support elements being rod-shaped.

The technical problem addressed by the invention is to provide a stand for filling hay nets which is suitable for self-assembly and easy to transport. Such a stand should also allow adjustment of its height to the height of the operator. Furthermore, to ensure its stability during the filling of the net, it should not require fastening to a wall. Another problem is to provide a stand with a net that enables rapid and easy filling with hay, tight packing of hay in the net, and easy removal of the net after filling without hay spillage.

The subject of the invention is a stand for filling hay nets comprising a frame to which a hoop for securing a hay bag is mounted, characterized in that the stand frame comprises a stand base from which at least one stand leg extends, wherein the leg of the stand consists of a lower part and an upper part, the lower part of the leg and the upper part of the leg being detachably connected to adjust the height of the stand leg, the lower and upper parts having first ends and second ends, and to at least one stand leg a stand hoop with hooks for securing the hay bag is mounted, the hooks being oriented with their hooking portions towards the inside of the stand hoop, and the hooks extending from the stand hoop towards the stand base.

In a preferred embodiment, the lower part of the leg is detachably connected at its first end to the stand base and at its second end to the upper part of the leg.

In the next preferred embodiment, the upper part of the leg comprises at its first end at least three mounting holes for detachable connection with the second end of the lower part of the leg and for adjusting the height of the stand for filling a hay net.

In another preferred embodiment, the stand hoop is detachably mounted to the second end of the upper part of at least one stand leg.

In another preferred embodiment, the stand comprises one stand leg or two stand legs.

In another preferred embodiment, the stand base is H-shaped.

The second subject of the invention is a set for filling hay bags for horses, characterized in that it comprises a stand for filling hay nets as defined in the first subject of the invention and a hay net adapted for cooperation with the stand hooks.

In a preferred embodiment, in the upper part of the net, the net meshes are grouped into bundles by circular connectors, wherein the number of bundles corresponds to the number of hooks in the stand hoop, and a cord is threaded through the circular connectors.

The solution according to the invention has a number of advantages. The hay stand according to the invention is assembled from several elements connected by screws and is easy to assemble independently. Moreover, the entire structure can be packed into a significantly smaller form for transport, such as for shipping. Additionally, it allows height adjustment to accommodate the user or the size of the hay net. Another advantage is the absence of any need to fasten the stand to a wall or floor to ensure its stability during loading of hay into the net suspended on it. Stability is ensured by the specially designed shape of the stand base. By using hooks on the stand hoop, the hay net can be hung thereon. For this purpose, the upper loops of the hay net are divided into equal groups with a tolerance of ±1. The number of groups corresponds to the number of hooks on the stand hoop. Depending on the net manufacturer and the mesh size, the number of upper loops varies. The loops are connected by rings or ovals made of thin wire. After hanging the net so that one ring or oval is placed on each hook, the net is tensioned and open at the top, which makes it easier to fill quickly with hay. The net does not fall off or collapse. When filling with a fork, the hay can be tightly compressed, allowing the net to be filled more densely so that a larger portion of hay lasts longer for the horse.

An example of the implementation of the invention is illustrated in the drawing, where:
Fig. 1 shows a front view of the hay stand
Fig. 2 shows a side view of the hay stand
Fig. 3 shows a top view of the hay stand
Fig. 4 shows a three-dimensional view of the hay stand with two legs
Fig. 5 shows a three-dimensional view of the hay stand with one leg
Fig. 6 shows a view of the upper edge of the net.

### Example

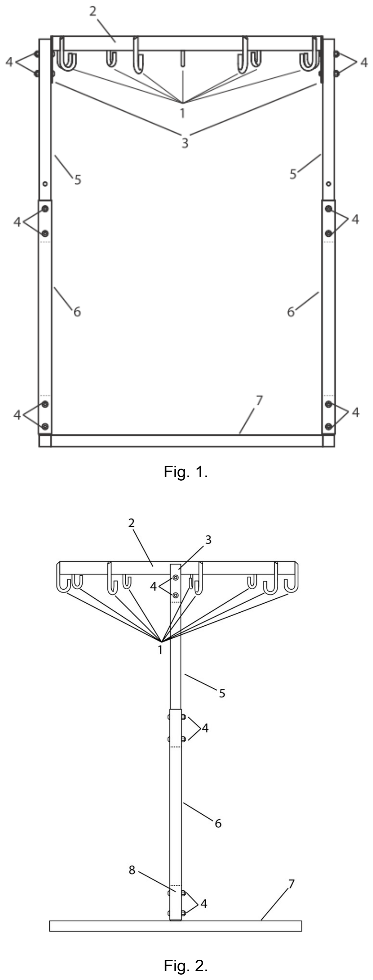

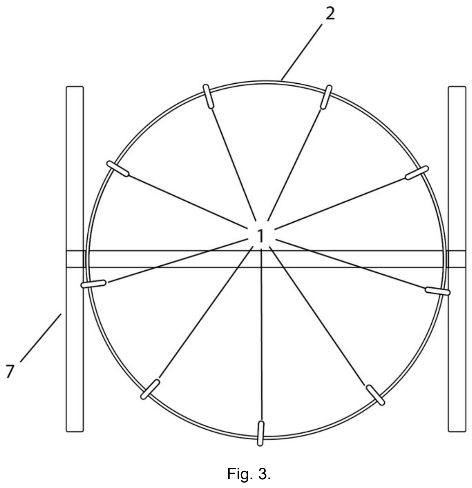

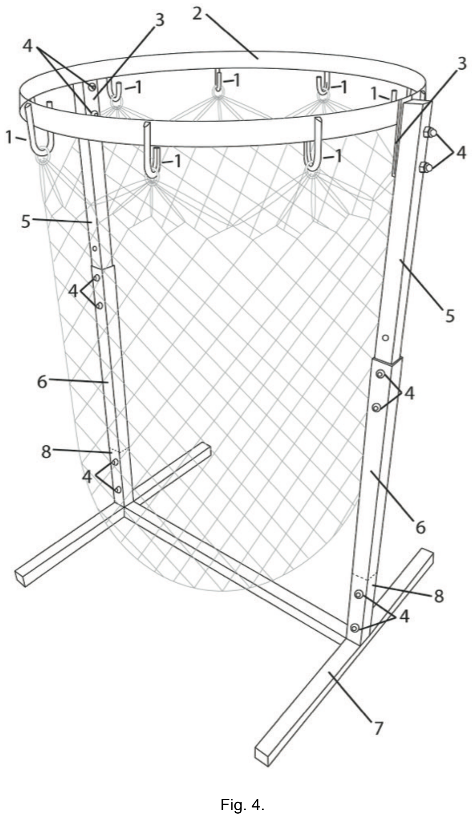

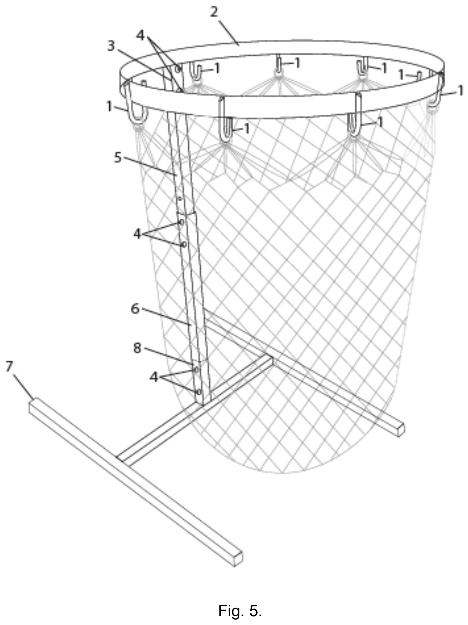

A stand for filling hay nets, according to the invention, is formed from a stand base 7 constructed from metal profiles arranged in an H-shape (Fig. 3). At least one short pin 8 made of the same profile is welded to the base 7. Each pin has two mounting holes 4. The stand base may also contain two pins 8. In Figs. 1 and 5, the endpoints of the pins 8 after placing the lower leg parts 6 onto them are indicated by a dashed line. The remainder of the description refers to the construction of a stand with two pins 8. However, in the variant with one pin 8, the essential structural elements are identical, which will be obvious to a skilled person based on the description. In the following sections, mounting holes 4 are included in other structural elements of the stand and are essentially identical each time. Individual elements may, however, have a different number of them. The stand construction with two legs and one leg is shown in Figs. 4 and 5 respectively.

Two lower parts of the stand legs 6 are mounted to the pins 8 in the base 7, the parts being steel profiles with a larger cross-section than the pins of the stand base 7. At both ends of the leg parts 6, two mounting holes 4 are made. Assembly of the lower leg parts 6 is carried out by sliding the steel profile of the pin from the stand base 7 into the lower leg part 6 and connecting them by means of two mounting screws through the mounting holes.

Two upper leg parts 5 are mounted to the second ends of the lower leg parts 6. Each upper leg part 5 has five mounting holes 4, three in its lower section and two in its upper section. The number of mounting holes in the upper part 5 for connection with the lower part 6 may be greater than three. Assembly of the upper parts 5 is carried out by inserting them into the steel profiles of the lower leg parts 6. A single lower leg part 6 and upper leg part 5 are positioned relative to one another so that corresponding mounting holes 4 align at the same height. Both parts (5, 6) are connected by two mounting screws through the mounting holes 4 on each leg. Two height settings of the upper leg part 5 are available. This is enabled by the three mounting holes for connecting the upper leg part 5 with the lower part 6. Both upper leg parts 5 are positioned at the same height. The base 7, lower leg parts 6, and upper leg parts 5 together form the frame of the stand for filling hay nets.

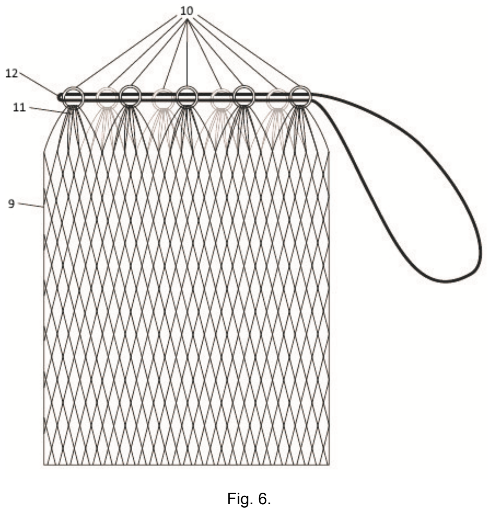

To the upper ends of the assembled and height-adjusted upper leg parts 5, the stand hoop 2 is mounted by connecting each upper leg part 5 with two mounting screws to a hoop bracket 3 welded symmetrically on both sides of the stand hoop 2. Numerous hooks 1 for hanging the net 9 are mounted at equal intervals to the stand hoop 2 such that their hooking ends face inward toward the center of the hoop 2, as visible especially in Figs. 1 and 4. The hooks 1 may be detachably mounted to the hoop, e.g. by screws, or permanently, e.g. by welding. The number of hooks 1 depends solely on the size (diameter, circumference) of the stand hoop 2. The hoop 2 defines the opening for placing the hay bag. The net 9 prepared for filling has its upper loops/meshes connected by metal rings or ovals 10 into equal bundles 11. The number of bundles corresponds to the number of hooks 1 on the hoop 2. A cord 12 is threaded through the rings or ovals 10, and the net 9 is hung from the hooks 1 by this cord, as shown in Fig. 6.

To fill the net 9, it is hung by mounting the rings or ovals 10 (circular connectors) on the hooks 1. The connectors 10 connect the finishing loops of the net 11 into bundles. After spreading the net 9 on the hooks 1 of the stand, it is filled. Thanks to the suspension on the hooks 1, the net 9 does not fall or shift. After filling the net 9, the cord 12 is tightened in several places (4-5) symmetrically distributed around the circumference of the hoop 2 and threaded through a carabiner (not shown in the figures), by means of which the filled net 9 is hung at its destination. After threading the cord 12, pulling the carabiner slightly upward causes the rings or ovals 10 to slide off the hooks 1. Then the net 9 is lowered and pulled out from under the hoop 2 to the outside of the stand. The stand allows quick and more intensive filling of the net with hay.

## Claims

1. A stand for filling hay nets comprising a frame to which a hoop for securing a hay bag is mounted, **characterized in that** the stand frame consists of a stand base (7) from which at least one stand leg extends, the stand leg comprising a lower part (6) and an upper part (5), the lower part (6) of the leg and the upper part (5) of the leg being detachably connected for adjusting the height of the stand leg, the lower (6) and upper (5) parts having first ends and second ends, and to at least one stand leg a stand hoop (2) with hooks (1) for securing the hay bag is mounted, the hooks (1) being oriented with their hooking portion toward the inside of the stand hoop (2), and the hooks (1) extending from the stand hoop (2) toward the stand base (7).

2. The stand according to claim 1, **characterized in that** the lower part (6) of the leg is detachably connected at its first end to the stand base (7) and at its second end to the upper part (5) of the leg.

3. The stand according to claim 1, **characterized in that** the upper part (5) of the leg comprises at its first end at least three mounting holes (4) for detachable connection with the second end of the lower part (6) of the leg and for adjusting the height of the stand for filling a hay net.

4. The stand according to claim 1, **characterized in that** the stand hoop (2) is detachably mounted to the second end of the upper part (5) of at least one stand leg.

5. The stand according to claim 1, **characterized in that** it comprises one stand leg or two stand legs.

6. The stand according to claim 1, **characterized in that** the stand base (7) is H-shaped.

7. A set for filling hay bags for horses, **characterized in that** it comprises the stand for filling hay nets as defined in claim 1 and a hay net (9) adapted to cooperate with the hooks (1) of the stand for filling hay nets.

8. The set according to claim 7, **characterized in that** in the upper part of the net (9) the net meshes (9a) are connected into bundles (11) by connectors (10), the number of bundles (11) corresponding to the number of hooks (1) in the stand hoop (2), and a cord (12) is threaded through the connectors (10).
